# DEMANDE DE BREVET EUROPEEN

(11) **EP 0 713 312 A1**
(43) Date de publication de la demande: **22.05.1996**
(21) Numéro de dépôt: 95402547.4
(22) Date de dépôt: 14.11.1995
(51) Int. Cl.: H04L 29/06, H04L 12/413

(54) **Interface par un réseau local**

(30) Priorité: 15.11.1994 FR 9413662
(71) Demandeur: DASSAULT ELECTRONIQUE, F-92210 Saint-Cloud (FR)
(72) Inventeur: Royer, Laurent, F-92330 Sceaux (FR); Rouzet, Philippe, F-78100 Saint Germain en Laye (FR)
(74) Mandataire: Plaçais, Jean-Yves

(57) **Abrégé**

Dans le branchement entre une station et le canal de communication d'un réseau à diffusion du type Ethernet, est insérée une unité-relais qui comprend une connexion (IDN2) vers la station, une connexion (IDN1) vers le canal, une mémoire (FIFO) à double port, comportant une zone station (FIFO_e) et une zone canal (FIFO_r) dimensionnée pour accepter toute réception jusqu'au voisinage de la charge maximale du canal de communication. Ces zones sont accessibles indépendamment en mode premier entré/premier sorti. Des moyens de traitement (UC1, UC2; MI) utilisent les deux zones de la mémoire afin de gérer séparément les échanges unité/canal et les échanges unité/station, et notamment pour la résolution de collisions selon des modes respectivement déterministe côté canal et standard côté station.

## Description

L'invention concerne les réseaux de communication à diffusion, notamment ceux du type dit "ETHERNET". La structure générale de ceux-ci est définie par les normes IEEE 802.3 ou ISO 8802-3, qui sont équivalentes.

Le réseau comporte un milieu ou canal de communication ("medium"), muni de branchements. A chaque branchement est en principe associée une station. Celle-ci doit pouvoir émettre des messages sur le réseau, ainsi qu'en recevoir par l'intermédiaire du réseau. Une station peut être constituée de tout système informatique, standard ou non.

Un branchement comprend un transcepteur ("transceiver") côté canal, et un "coupleur" côté station. Les échanges coupleur/transcepteur, normalisés, comprennent des signaux de données bidirectionnels, auxquels s'ajoutent des signaux d'état, dont un signal d'émission (TX), un signal de réception (RX), ainsi qu'un signal de collision (COL). Cette notion de collision est particulière aux réseaux du genre ETHERNET, où l'émission est libre en temps normal. Elle correspond (en simplifiant) au fait que deux stations ont cherché à émettre au même moment. Enfin, habituellement, le coupleur assure l'alimentation électrique du transcepteur.

De nombreuses applications ont été développées selon la norme. Il a aussi été envisagé d'intégrer matériellement le coupleur et/ou le transcepteur dans la station, qui, alors, s'interface directement au canal. La possibilité d'interconnecter les stations entre elles est en principe toujours assurée, puisque la liaison coupleur/transcepteur est standardisée.

Mais des difficultés apparaissent dans certains cas:
- La norme prévoit un procédé de résolution de collision dit "BEB", décrit plus loin. Ce procédé ne fixe aucune limite au temps qui sera consacré à la résolution d'une collision, ce qui est très pénalisant pour certaines applications. Il est vrai que l'on connaît des perfectionnements à ce protocole, qui puissent le rendre "déterministe", en ce sens que le temps de résolution d'une collision puisse toujours demeurer inférieur à un maximum fixé à l'avance (FR-A-2 597 686). Mais ceci n'est pas compatible avec les coupleurs standards conformes à la norme de base.
- Il peut être utile de rendre le réseau local redondant, en doublant le canal de communication. Mais, en l'état actuel des choses, il en découle la nécessité de doubler l'ensemble de l'équipement, y compris les transcepteurs et les coupleurs, ce qui reporte sur la station utilisatrice la charge de gérer cette redondance. Cela aussi n'est pas compatible avec les systèmes actuels établis selon la norme de base.

Plus généralement, toute modification apportée par rapport à la norme risque d'obliger à développer de nouveaux équipements, spécifiquement adaptés à cette modification, et, en même temps, de rendre caducs un grand nombre d'équipements existants.

La présente invention vient apporter une solution à ce problème.

L'un des buts de la présente invention est de fournir un dispositif qui puisse fonctionner en offrant exactement la même interface à la station utilisatrice, quel que soit le type de milieu de communication utilisé, et son mode de travail. En d'autres termes, la station ne verra aucune différence entre le réseau ici proposé, et les réseaux connus, conformes à la définition standard du coupleur.

Un autre but de l'invention est de permettre une utilisation optimale de la bande passante du canal de communication, d'une manière transparente pour la station.

L'invention vise en outre à atteindre ces buts indépendamment du fait que le milieu de communication est ou non dédoublé pour fonctionner en mode redondant. Elle vise encore à le faire d'une manière compatible avec un protocole de communication de type "déterministe".

Un autre but de l'invention est de fournir des réseaux de communications qui puissent opérer en temps réel avec une grande sécurité, y compris dans des environnements exigeants ou difficiles.

L'invention a encore pour but de permettre la circulation de messages de service, également d'une manière "transparente" pour les stations.

Il est connu de prévoir des moyens de traitement entre le coupleur et le transcepteur, afin d'assurer un contrôle des données et des signaux d'état échangés entre ceux-ci. Ces moyens de traitement sont en principe répartis entre le coupleur et le transcepteur.

Selon l'invention, ces moyens de traitement sont installés dans une unité-relais, que l'on interpose entre la station et le canal. Cette unité-relais comporte une mémoire, gérée en premier entré/premier sorti. Les moyens de traitement sont agencés pour utiliser la mémoire afin de gérer séparément les échanges relais/canal et les échanges relais/station, selon deux modes au moins partiellement différents (le mot "mode" vise ici à la fois les caractéristiques physiques du réseau, notamment du canal, et le procédé ou protocole suivant lequel on l'utilise).

De préférence, cette gestion s'effectue en fonction d'une condition portant sur le remplissage de la mémoire.

Dans un mode de réalisation, l'unité-relais comporte:
- une connexion vers la station, qui peut comprendre un codeur-décodeur-station,
- une connexion vers le canal de communication, qui peut comprendre un codeur-décodeur-canal, et même incorporer le transcepteur du canal de communication,
- côté canal, les moyens de traitement coopèrent avec le transcepteur du canal pour définir des signaux d'état-canal, (RX, TX, COL), au niveau du canal de communication. Ils répondent au fait que les signaux d'état-canal indiquent une réception, en stockant temporairement les données-canal dans la mémoire en vue de leur soumission immédiate ou ultérieure au codeur-décodeur-station;
- côté station, les moyens de traitement coopèrent avec le coupleur de la station pour définir d'autres signaux d'état, dits signaux d'état-station, (RX , TX, COL). Ils sont aptes à répondre à une demande d'émission par la station en stockant temporairement les données d'émission (station vers canal) dans ladite mémoire, en vue de leur soumission immédiate ou ultérieure au codeur-décodeur-canal.

Dans une variante, la connexion vers la station incorpore un transcepteur "relais/station", tandis que la station comprend non seulement un coupleur, mais aussi un transcepteur, et la liaison station/relais est alors assurée, entre ces deux transcepteurs, par un moyen semblable à un canal de communication ("pseudo-réseau").

Dans une autre variante qui peut être combinée avec la variante précédente, on munit les moyens de traitement d'un moyen de gestion de deux canaux en redondance, côté canal, les deux canaux pouvant présenter des dissymétries de topologie (différence de longueur, par exemple) et/ou de nature (matériaux différents, par exemple).

D'autres caractéristiques et avantages de l'invention apparaîtront à l'examen de la description détaillée qui va suivre et des dessins annexés, sur lesquels :
- la figure 1 est un schéma de principe général d'un mode de réalisation d'un réseau classique à câble coaxial, de type ETHERNET;
- la figure 2 est un schéma montrant comment un dispositif selon l'invention vient s'insérer dans un tel réseau;
- la figure 3 est un schéma semblable à la figure 2, mais dans le cas où on utilise une redondance au niveau du câble coaxial;
- la figure 4 est un schéma de principe général d'un dispositif coupleur de type connu;
- la figure 5 est un schéma de principe général d'un dispositif selon la présente invention;
- les figures 6 et 7 illustrent deux variantes d'un mécanisme animant le dispositif selon l'invention;
- la figure 8 illustre une variante du dispositif selon la présente invention;
- les figures 9 et 10 sont deux tableaux utiles à la description de la gestion de la redondance; et
- les figures 11, 12 et 13 illustrent respectivement un mécanisme d'émission, un mécanisme de réception et un mécanisme de divergence animant le dispositif selon l'invention lors du traitement de la redondance.

Les dessins annexés sont, pour l'essentiel, de caractère certain. En conséquence, ils font partie intégrante de la présente description. Ils pourront donc non seulement servir à mieux faire comprendre celle-ci, mais aussi contribuer à la définition de l'invention, le cas échéant.

L'invention s'applique en particulier aux réseaux de communication à diffusion (les messages sont physiquement accessibles à tous les usagers, quel qu'en soit le destinataire réel), et à contention (l'émission de messages est libre, d'où la possibilité de collisions d'émission; pour résoudre celles-ci, certains devront s'abstenir ou se contenir d'émettre, selon un protocole prédéfini).

A cette classe appartiennent les réseaux dits CSMA/CD ("Carrier Sense Multiple Access with Collision Detection"), dont font partie les réseaux dits "Ethernet". La diffusion s'effectue sur un milieu ("medium") ou canal de communication, qui peut être une liaison coaxiale ou "bus" (comme "10base2" ou "10base5"), une paire électrique torsadée ("10baseT"), ou encore une fibre optique ("FOIRL"), par exemple.

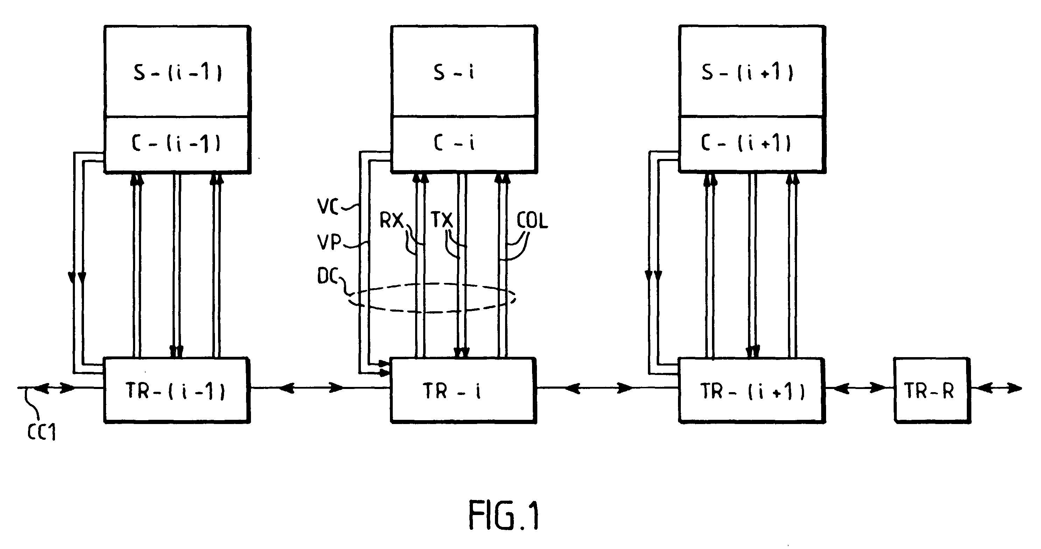

La figure 1 montre une partie d'un réseau, où le canal, de type bus, est un câble coaxial.

Le branchement d'une station au canal comprend:
- côté canal CC1, un transcepteur TR-i ("transceiver" ou "MAU", pour Medium Attachment Unit), chargé de transformer les signaux circulant sur le canal en des signaux électriques de format classique, utilisables par des circuits électroniques de traitement, et réciproquement.
- côté station S-i, un coupleur C-i, dont la liaison au transcepteur est standardisée (niveau dit "AUI" pour "Attachment Unit Interface" des normes ISO 8802-3 ou IEEE 802.3). En plus des signaux de données, le coupleur C-i et le transcepteur TR-i échangent, par des liaisons en paires différentielles, des signaux d'état, dont un signal d'émission (dit TX ou DO), un signal de réception (RX ou DI), ainsi qu'un signal de collision (COL ou CO). Enfin, le coupleur assure habituellement l'alimentation électrique du transcepteur (lignes dites VC, VP). Ensemble, ces lignes forment un câblage de liaison DC ("Drop Cable").

Dans certains cas, comme ceux de la paire torsadée ou de la fibre optique, la liaison réalisée sur le canal est du type "point à point". Pour les liaisons point-à-point, et pour certains canaux de type bus, on prévoit aussi des transcepteurs, tels que TR-R (Fig. 1), qui jouent le rôle d'amplificateur ou répéteur (bi-directionnel) pour le milieu de communication.

La structure des messages obéit à des règles de format, d'où l'usage fréquent du mot "trame" comme synonyme de "message".

Dans un réseau Ethernet, le canal de communication est, à un instant donné et en un point donné, dans l'un des trois états suivants:
- canal vide (V), aucun émetteur, pas de porteuse et pas de collision ;
- message (M) sur le canal, 1 émetteur, une porteuse et pas de collision ;
- collision (C), plus d'un émetteur.

Dans le cas d'une collision, l'état du canal dépend de différents choix faits à la conception du réseau.

Dans un premier type de réseaux (liaison coaxiale), l'état du canal reflète l'existence d'émissions, par exemple par l'existence d'une tension continue, qui augmente en fonction du nombre d'émission en cours. Une station qui veut émettre peut alors détecter immédiatement le fait qu'une émission est déjà en cours. Détectant ainsi une collision, elle va la renforcer, par exemple en émettant un bourrage ou brouillage ("jam") sur le canal. Ce renforcement dure assez longtemps pour que toutes les stations puissent percevoir la collision.

Dans d'autres réseaux (paire torsadée, fibre optique), où les liaisons sont point-à-point, l'émission et la réception ne coexistent que dans les sections du canal où se trouvent des stations émettrices; dans les autres sections, il n'y a que la réception. On laisse alors ces signaux se propager librement sur le canal, sans intervenir. Il en résulte qu'a priori, seules les stations qui ont participé à la collision, en commençant à émettre, connaissent l'existence d'une collision.

D'une manière générale, différents moyens de faire connaître la collision aux autres stations sont envisageables, suivant la nature du canal, et les choix de conception du réseau:
- si, par exemple, la longueur d'une trame minimale est au moins égale à une durée-seuil (51,2 microsecondes selon la norme), la réception d'une trame de longueur inférieure à cette durée-seuil indique alors l'existence d'une collision (c'est le mode le plus courant pour détecter une collision).
- La réception d'informations indécodables est en principe une indication, malheureusement tardive, d'une collision (cette indication ne peut pas être traitée au niveau du transcepteur).
- à l'opposé, une collision pourrait être définie par l'existence d'un silence prolongé sur le canal, notamment dans le cas où l'on procède sur ce canal à des émissions systématiques de service (informations "hors données station"), en l'absence d'émission par les stations elles-mêmes.

Soit MPT le temps maximal que met une trame pour parcourir tout le réseau (d'une extrémité à une autre).

On définit des intervalles de temps, dénommés:
- "espace inter-trames" ou IFS ("inter-frame spacing")
- "tranche canal" ou SLT ("Slot Time"), qui est au moins égale au double du temps MPT.

L'espace inter-trames IFS est lié à la dualité émission/réception. Quand une station veut émettre une trame, elle écoute d'abord sur le canal; s'il est occupé, elle maintient son écoute; quand le canal se libère, la station doit encore attendre pendant un temps égal à l'espace inter-trames IFS (pour tenir compte du temps de passage de la réception à l'émission au niveau des transcepteurs).

A noter que pendant son émission, une station pourrait continuer à écouter, pour comparer ce qu'elle écoute à ce qu'elle émet. Ainsi, une station qui émet a toujours la possibilité de détecter une collision.

La tranche canal SLT est l'intervalle de temps critique pour les collisions. En un point du réseau, un silence au moins égal au temps MPT signifie que personne n'émet. Mais la collision la plus défavorable se produit lorsqu'une station A émet à une extrémité du réseau, et qu'une station B située à l'autre extrémité commence à émettre juste avant d'avoir pu percevoir l'émission de A (donc B est décalée de presque MPT par rapport à A); au moment (décalage MPT) où elle perçoit l'émission de A, la station B reconnaît la collision (et émet aussitôt le brouillage -"jam"- précité, si la structure du réseau le permet). Mais un temps égal à 2 fois MPT va s'écouler avant que A ne perçoive l'émission de B (avec ou sans brouillage), et ne détecte elle aussi la collision.

La norme Ethernet de base prévoit la résolution de collisions par un procédé standard dit BEB ("Binary Exponential Back-off"). Lorsqu'une collision s'est produite, toutes les stations gardent la faculté d'émettre, mais pas à n'importe quel moment. En toute situation de collision (la première et les suivantes), chaque station qui a participé, en émettant, à la collision en cours, va tirer au sort un nombre binaire BN dans l'intervalle [0, 2^{k}-1], où k est le minimum entre 10 et le nombre i de collisions consécutives qui ont été vues par la station considérée. La station n'a le droit d'émettre, après la dernière collision vue, qu'au bout d'un temps égal à BN fois la tranche canal SLT. A cela s'ajoute un nombre maximum toléré de collisions consécutives (16 selon la norme).

Il en résulte l'impossibilité de garantir un temps maximum d'attente à l'émission, ce qui pose un problème dans certaines applications, tout particulièrement dans les réseaux dits "temps réel". On imagine en effet qu'un tel réseau ne peut fonctionner sans temps d'attente maximal garanti.

On appelle "déterministe" un mode de résolution de collision (et, par extension, un réseau) qui assure un temps d'attente maximal garanti. Les solutions envisagées dérogent au procédé BEB, en cas de collision et conservent le mode CSMA/CD classique pour le reste.

L'une de ces solutions consiste à attribuer à chaque station un numéro qui lui est propre. Après une collision (la fin de l'état de collision), on attend d'abord un espace inter-trames IFS; puis les stations vont compter, en incrémentant chaque fois que s'est écoulé un temps caractéristique, avec les règles suivantes:
- une station a le droit d'émettre quand son comptage devient égal à son numéro,
- le temps caractéristique est SLT si personne n'émet, ou, si quelqu'un émet, la durée de la trame émise + IFS.

En notant SN le nombre de stations, et TRMAX la durée maximale de la trame d'émission, le temps maximal de résolution d'une collision est la somme :
- de la durée maximale, bornée, de la première collision, et
- du produit SN * (TRMAX+IFS), dans le cas où les stations veulent toutes émettre et sont toutes en fonction (on peut diffuser dans le réseau des informations de service, dont le nombre de stations en fonction et la définition de leurs numéros).

Dans certains cas, en particulier ceux du type temps réel, il est intéressant d'appliquer cette solution "déterministe" et/ou d'y prévoir une redondance, c'est à dire un doublement (ou plus) du canal de communication.

Mais les réseaux existants ou déjà conçus sont fondés sur une interface standard, que l'on appelle "coupleur", normalisée pour le dialogue avec le transcepteur qui assure la liaison physique au canal.

A priori, l'application des perfectionnements précités aux réseaux existants ou déjà conçus suppose de refondre complètement les coupleurs. De même, pour des réseaux futurs, il faudrait s'écarter des coupleurs normalisés, ce qui nuit à la généralité d'application de réseaux ainsi conçus.

La Demanderesse a trouvé comment écarter cette difficulté.

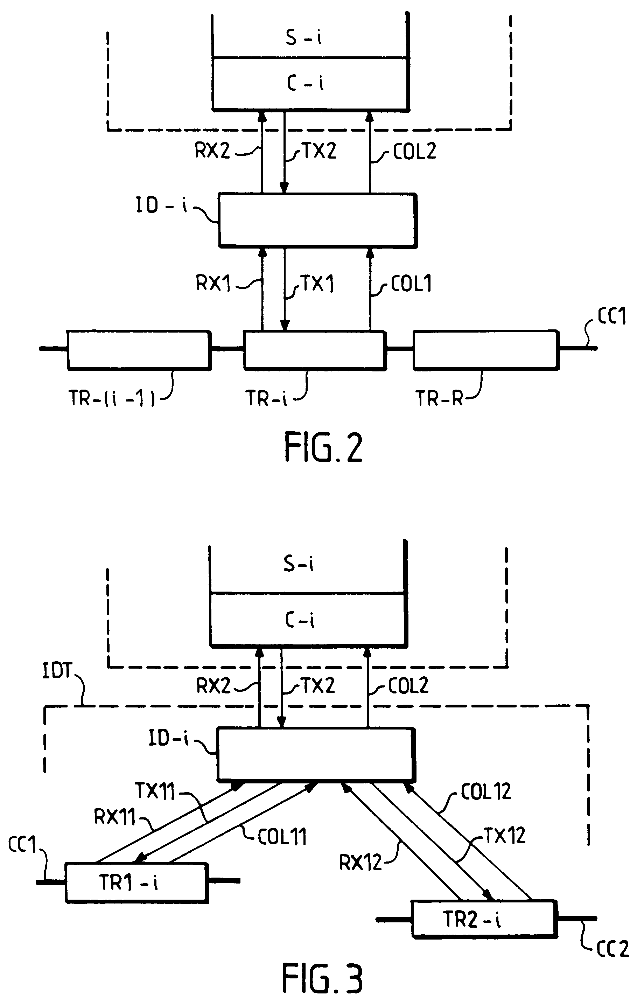

L'une des idées de base de l'invention (figure 2) consiste à prévoir, entre le coupleur C-i et le transcepteur TR-i, un dispositif relais ID-i, muni d'une mémoire. On distingue entre les signaux d'état-canal RX1, TX1 et COL1 et les signaux d'état-station RX2, TX2 et COL2. Si le canal est doublé pour la redondance (figure 3), il y a alors deux jeux de signaux d'état canal, à savoir:
- RX11, TX11 et COL11 pour le canal CC1, et
- RX12, TX12 et COL12 pour le canal CC2.

Ceci est rendu possible par le stockage temporaire des données-canal et/ou des données-station dans la mémoire.

D'ores et déjà, on remarquera que ce dispositif permet:
- d'une part de simuler une émission pour la station pendant que l'on reçoit des données du canal (la réception a priorité); on lui transmettra ensuite les données reçues pendant qu'on émettra les siennes.
- D'une autre part, il permet de travailler avec une station opérant en mode de résolution de collision classique BEB, tandis qu'on exploite en réalité le canal selon un mode de résolution de collision déterministe.
- En outre, en cas de redondance du canal, il permet de gérer la redondance de façon transparente pour la station.

Une variante intéressante des figures 2 et 3 consiste à intégrer le transcepteur (TR-i) ou les transcepteurs (TR1-i et TR2-i) à l'intérieur même de l'unité ID-i. Sans nuire au but recherché, ceci permet d'utiliser pour les transcepteurs des circuits mieux intégrés au reste du bloc ID-i, et par conséquent d'en diminuer la consommation électrique. De préférence, l'alimentation de l'ensemble est alors réalisée à partir du coupleur ID-i, en particulier dans le cas de la figure 3, où cette intégration est illustrée par le cadre IDT.

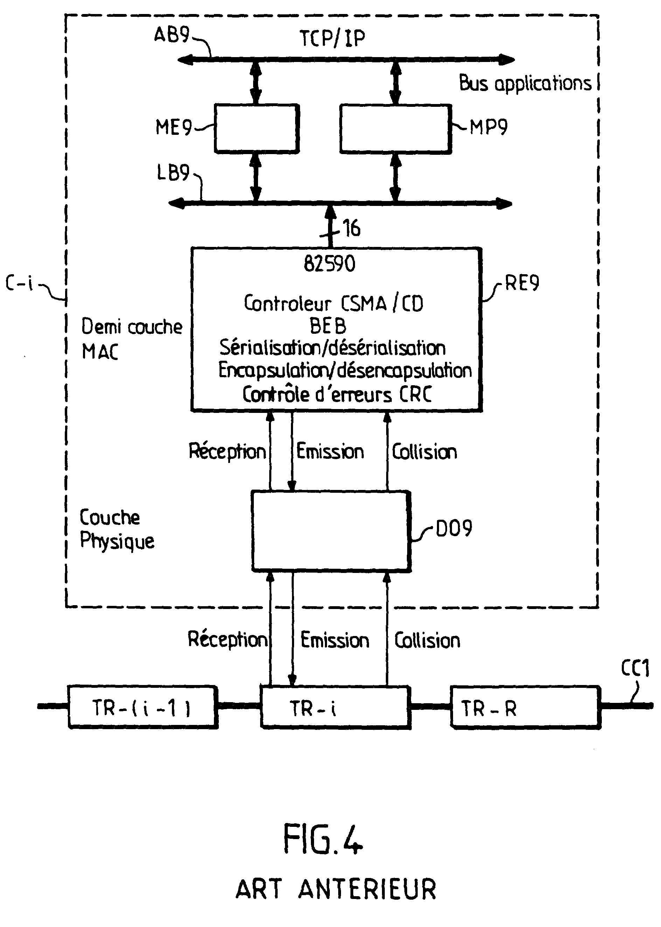

La figure 4 illustre un exemple de structure connue de coupleur C-i, dans le cas particulier d'une application industrielle en temps réel.

On retrouve sur la figure 4 les éléments TR-(i-1), TR-i et TR-R montés sur le câble coaxial CC1, comme sur les figures précédentes.

Selon la technique antérieure, au transcepteur TR-i se trouve directement reliée la sortie du coupleur C-i, en l'espèce définie par un codeur-décodeur MANCHESTER DO9, qui peut être fondé sur le circuit 82C501 vendu par INTEL CORPORATION.

En partie haute de la figure 4, un bus d'application AB9 est défini pour opérer suivant le protocole TCP/IP (IP pour "Internet Protocol"; TCP pour "Transmission Control Protocol"). L'homme du métier sait que le protocole IP permet de convertir tous les services fournis par le réseau en un service dit de "datagramme", possédant un format de paquets particulier. De son côté, le protocole TCP assure la sauvegarde temporaire des données, aussi bien en mode réception qu'en mode émission, ainsi qu'un contrôle de leur flux, et éventuellement un multiplexage permettant à plusieurs processus d'une même machine hôte d'utiliser le même coupleur.

En dessous du bus d'application AB9 apparaît un bus liaison LB9, avec entre ces bus une mémoire d'échange ME9, qui peut être gérée par une unité de commande à microprocesseur MP9.

Les signaux circulant sur le bus LB9 sont d'un format directement utilisable par un bloc RE9, formant ce que l'on appelle une demi-couche MAC (pour "Medium Access Control").

Ce bloc RE9 peut être fondé sur le circuit intégré 82590 (ou 82592, qui ne diffère de 82590 que par l'absence d'accès mémoire direct ou DMA - ces circuits sont vendus par INTEL CORPORATION). Un tel circuit réalise les fonctions de contrôleur CSMA/CD, de résolution de collision suivant le protocole BEB précité, de sérialisation/désérialisation (passage série/parallèle), d'encapsulation/désencapsulation, ainsi qu'un contrôle d'erreur de type CRC ("Cyclic Redundancy Check"). La notion d'encapsulation signifie que l'on encadre les messages proprement dits d'informations de contrôle utiles à leur transmission sur le réseau.

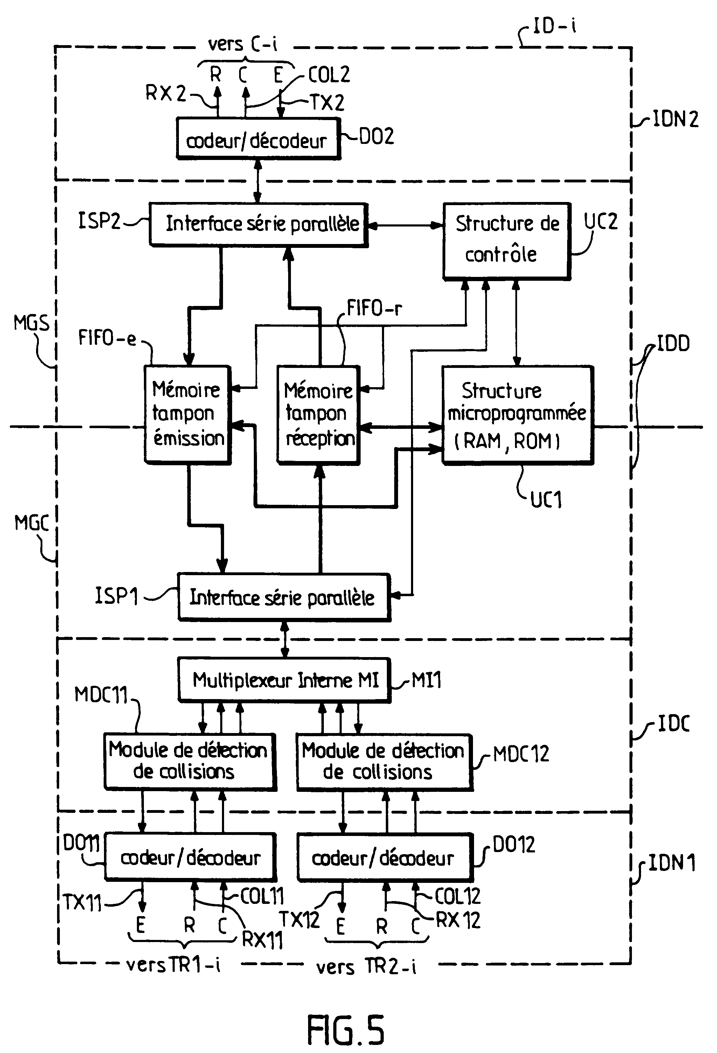

C'est par exemple dans un tel contexte que le dispositif unité-relais ID-i selon l'invention (figure 5) va venir s'insérer entre le coupleur C-i et le transcepteur TR-i, au lieu que ces deux éléments soient directement reliés, comme selon l'art antérieur, par des codeurs-décodeurs respectifs (non représentés).

La figure 5 est un schéma de principe de l'unité-relais ID-i selon l'invention, dans le cas d'une redondance, où sont prévus deux canaux de communication (voir figure 3). Ici, l'unité ID-i (abrégé ci-après en ID) est décomposable en des unités de codage/décodage IDN1 et IDN2, respectivement côté canal/canaux et côté station, avec, entre les deux, et de haut en bas, une unité de gestion de données IDD, et une unité de gestion de canal/canaux IDC.

En conséquence (Figure 5, partie basse), l'unité IDN1 du dispositif ID comporte deux codeurs/décodeurs DO11 et DO12, respectivement destinés à être connectés à ceux des transcepteurs TR1-i et TR2-i de la figure 3. De même (Figure 5, partie haute), l'unité IDN2 du dispositif ID-i comporte un codeur-décodeur DO2. Dans un mode de réalisation, il s'agit de codeurs-décodeurs utilisant le code dit MANCHESTER, codeurs-décodeurs qui peuvent être semblables au circuit intégré 82C501.

On décrira maintenant le reste de la figure 5, de haut en bas. Après l'unité IDN2, les entrées/sorties série du codeur-décodeur DO2 sont appliquées à l'unité IDD. Celle-ci commence par une interface série/parallèle bidirectionnelle ISP2 (côté série en haut, côté parallèle en bas). Ensuite, l'unité IDD comprend une mémoire, ici constituée de deux blocs de mémoire, l'un FIFO_e servant de mémoire-tampon pour l'émission, c'est-à-dire de la station vers le canal, et l'autre FIFO_r servant de mémoire-tampon pour la réception, c'est-à-dire du canal vers la station. On peut prévoir en variante une seule mémoire divisée en deux zones. En bas, les mémoires FIFO_e et FIFO_r sont reliées à une autre interface série/parallèle bidirectionnelle, notée ISP1 (parallèle côté haut, série côté bas).

Une unité de contrôle UC1, microprogrammée, gère les mémoires FIFO_e et FIFO_r, notamment leur adressage. Elle peut également accéder aux données elles-mêmes que ces mémoires échangent (les voies de données sont illustrées sur le dessin par des traits épais).

Les traitements côté station s'effectuent sous le contrôle de l'unité de commande de niveau supérieur UC2, qui pilote les transferts de données exécutés par les mémoires tampon d'émission FIFO_e, et de réception FIFO_r, ainsi que par les deux interfaces série/parallèle bidirectionnelles ISP1 et ISP2, et bien entendu l'unité de contrôle UC1.

Les échanges entre l'unité IDD et l'unité IDN1 sont réalisés à travers une unité IDC d'échange coté canal, qui comprend de bas en haut:
- deux modules de détection de collision MDC11 et MDC12, respectivement reliés aux deux codeurs-décodeurs DO11 et DO12 de l'unité IDN1, et
- un multiplexeur interne bidirectionnel MI1, propre à relier les deux modules MDC11 et MDC12 à l'interface série-parallèle ISP1 de l'unité IDD.

On pourrait en variante déplacer l'interface série/parallèle ISP1, vers l'autre côté du multiplexeur MI, sous réserve alors de le doubler. Par ailleurs, lorsqu'un seul canal de communication est utilisé, les éléments MDC12 et DO12 sont mis hors fonction ou supprimés.

Les fonctions du bloc MI1 (multiplexage bidirectionnel) sont d'assurer la transformation des signaux issus des deux canaux en un seul groupe de signaux, ce qui implique également, dans le mode de réalisation décrit, de gérer la redondance, ce que l'on examinera plus loin.

On s'intéressera maintenant à la résolution de collisions.

Elle peut être définie fonctionnellement comme suit.
- l'ensemble IDN2+IDD (en détail, UC1, UC2, ISP2, DO2, FIFO et ISP1) réalise globalement les mêmes fonctions que le circuit intégré 82590 de la figure 4, sauf que le protocole BEB de celui-ci serait inhibé, de façon à permettre à l'intérieur de l'unité ID une réémission immédiate des données station vers le circuit MI1, hormis le cas où celui-ci l'interdit (la réception de messages depuis le canal a en principe priorité absolue). Au niveau des mémoires FIFO, l'unité UC1 va alors interdire l'émission depuis la mémoire FIFO_e, tout en favorisant la réception vers la mémoire FIFO_r.
- de son côté l'ensemble IDC+IDN1 (en détail, MI1, MDC11, MDC12, DO11, DO12) gère le ou les canaux suivant tout protocole voulu, de préférence avec un mode déterministe pour la résolution de collisions.

Fonctionnellement, on peut donc faire une distinction entre des moyens de traitement (gestion de données) côté canal MGC et des moyens de traitement (gestion de données) côté station MGS. Les mémoires FIFO_e, FIFO_r, leurs unités de commande ou de contrôle UC1 et UC2, ainsi que les interfaces série/parallèle ISP1 et ISP2 sont à cheval entre les deux, comme le montre le trait interrompu séparant sur la figure 5 les liaisons vers le haut et les liaisons vers le bas des mémoires FIFO_e et FIFO_r.

Au lieu d'être séparés comme représenté, les blocs de mémoire FIFO_e et FIFO_r peuvent être réunis en une seule unité de mémoire, gérée en mode premier entré - premier sorti, mais d'une manière sélective pour l'émission et la réception, avec priorité aux accès en réception, c'est-à-dire pour les données-canal. Il est également avantageux que la ou les mémoires soient du type à double port, c'est-à-dire qu'elles permettent simultanément des accès en lecture et des accès en écriture. Cette simultanéité peut être physique, ou simplement apparente, c'est à dire que les opérations d'écriture et de lecture sont multiplexées temporellement suffisamment vite pour apparaître simultanées à la cadence de travail désirée.

L'ensemble MI1, MDC11 (éventuellement MDC12), DO11 (éventuellement DO12) peut être réuni en un seul circuit intégré spécialisé (ASIC), auquel on ajoutera en variante le ou les transcepteurs (TR; TR1 et TR2). La Demanderesse fabrique maintenant un tel circuit.

Les moyens de traitement côté canal MGC ont d'une façon générale priorité pour les accès à la mémoire FIFO_r en réception depuis le canal. De plus, les unités de commande UC1 et UC2 ont plein contrôle sur l'envoi du contenu de la mémoire d'émission FIFO_e vers le canal. En conséquence, les moyens de traitement côté canal MGC peuvent fonctionner d'une manière générale classique, sauf:
- le fait que ces moyens utilisent préférentiellement un protocole de résolution de collision déterministe, au lieu du protocole de détection de résolution de collision BEB standard, et
- la gestion de la redondance.

Il est donc considéré comme accessible à l'homme du métier de réaliser ces moyens de traitement côté canal MGC, dans l'hypothèse où ils utiliseraient un canal non redondant avec un protocole classique, du genre BEB.

Il est également considéré comme accessible à l'homme du métier de réaliser ces mêmes moyens de traitement côté canal MGC, dans l'hypothèse où ils utiliseraient un canal non redondant avec un protocole déterministe, ceux-ci étant déjà connus, et utilisables par exemple sur la base des circuits intégrés INTEL 82592 et équivalents, et/ou du brevet français précité.

La gestion de la redondance sera traitée plus loin.

De leur côté, les moyens de traitement côté station MGS sont nécessairement adaptés selon l'invention, car ils n'ont pas priorité en règle générale. Le mécanisme des échanges entre la station et la ou les mémoires FIFO doit donc:
- tenir compte précisément de la priorité de principe attribuée à la réception côté canal, et
- en même temps assurer les échanges avec la station en simulant pour celle-ci le comportement normal d'un transcepteur, ou plus généralement, d'une liaison station/canal normalisée.

on décrira maintenant deux exemples de ce mécanisme, dont il est essentiel de comprendre qu'il ne concerne que les échanges entre la station et les mémoires FIFO_e et FIFO_r. En conséquence, par exemple, "émission" signifie "émission de la station vers l'unité relais".

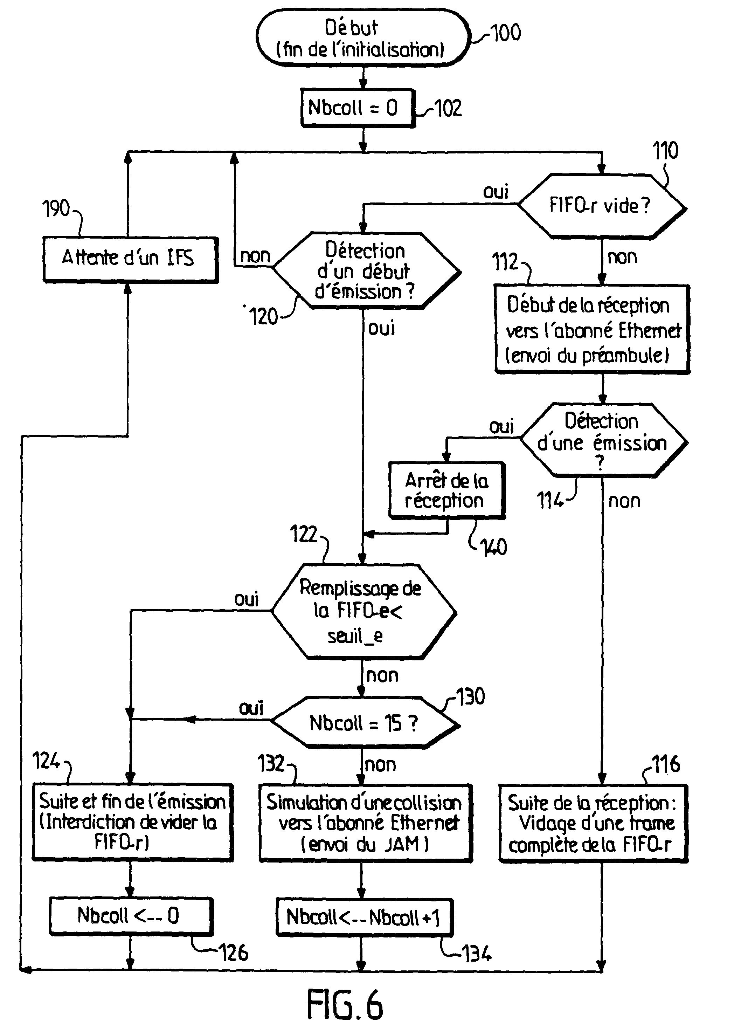

Le mécanisme utilisé préférentiellement en liaison avec le mode de réalisation de la figure 5 est illustré sur la figure 6.

Il commence par une phase de début 100, qui comprend des étapes d'initialisation du dispositif, avec en 102 la mise à la valeur 0 d'une grandeur ou variable notée Nbcoll (nombre de collisions).

L'étape suivante 110 consiste à déterminer si la mémoire de réception FIFO_r est vide, c'est-à-dire qu'elle ne contient aucune donnée reçue du canal et en attente de retransmission vers la station (en variante, très peu de telles données).

Si la réponse au test 110 est "pas de réception en attente", une étape 120 détecte si l'on est en présence d'un début d'émission par la station, c'est à dire si la station commence à émettre une trame vers l'unité ID (en croyant qu'il s'agit du canal; c'est donc une pseudo-émission). En l'absence de demande d'émission, on retourne à la sortie de l'étape 102. Les étapes 110 et 120 définissent donc une sorte de boucle d'attente d'un événement, soit en réception (très exactement en retransmission de la mémoire FIFO_r à la station de données déjà reçues du canal et stockées dans la mémoire FIFO_r), soit en émission depuis la station vers la mémoire FIFO_e de l'unité ID.

Dans le cas où la réponse au test 110 indiquait que des données reçues du canal sont en attente, l'étape 112 produit un début de "réception" vers la station ("abonné ETHERNET"). Le mot "réception" est utilisé car la station croit recevoir les données du canal, alors qu'il s'agit de la retransmission d'informations reçues depuis la mémoire vers la station, donc d'une pseudo-réception. Pratiquement, ce début de réception consiste à envoyer le préambule habituel des données, que l'on appelle aussi encapsulation, mais qui ne comprend pas les données utiles elles-mêmes.

Si, pendant cet envoi du préambule, le test 114 indique que de son côté la station a commencé à émettre des données vers l'unité ID, alors l'étape 140 arrête la "réception".

Comme seul le préambule a été envoyé, ces données sont restées en mémoire, et demeurent ainsi disponibles pour une tentative ultérieure de retransmission vers la station.

En l'absence d'une tentative d'émission par la station au niveau du test 114, l'étape 116 poursuit la réception, c'est-à-dire que l'on retransmet une trame complète depuis la mémoire FIFO_r vers la station, à travers les organes ISP2 et DO2 de la figure 4, sous le contrôle de l'unité de commande UC2, tandis que la mémoire est elle-même pilotée par l'unité UC1.

Après cela, on passe à l'étape finale 190 qui est l'attente habituelle du temps IFS, pour retourner à la sortie de l'étape 102.

Si, en l'absence de réception en attente au test 110, le test 120 indique un début d'émission, alors l'étape 122 recherche si le niveau de remplissage de la mémoire d'émission FIFO_e est inférieur à un seuil, noté "seuil_e". Si oui, alors la mémoire d'émission est considérée comme en mesure d'accepter de nouvelles données, et l'étape 124 poursuit l'émission par la station vers l'unité ID, c'est-à-dire l'entrée en mémoire FIFO_e des données issues de la station. En même temps, les unités UC1 et UC2 coopèrent pour interdire toute action sur la mémoire FIFO_r, mais seulement en vidage de celle-ci vers la station.

On peut prévoir ensuite une étape 126 remettant à zéro la grandeur Nbcoll, après quoi on repasse à l'étape 190 comme précédemment.

Si la réponse à l'étape 122 est que la mémoire FIFO_e est déjà fortement remplie, on a en principe "collision" côté station (ce n'est pas une collision sur le canal, mais une pseudo-collision, simulée pour la station, et simplement due au fait que l'unité ID refuse de recevoir de nouvelles données en émission depuis la station).

Au préalable, un test 130 détermine si le nombre de collisions antérieurement comptées est égal à 15. Si oui, on est à la seizième collision, et, par exception absolue au protocole de résolution de collision connu BEB, on va alors accepter quand même les données émises par la station, pour les stocker dans la mémoire FIFO_e, à l'étape 124, sans manifester une nouvelle collision à la station (qui, croyant émettre sur un canal opérant en mode BEB, ne répéterait pas sa tentative d'émettre une nouvelle fois).

Si au contraire le nombre de collisions n'a pas encore atteint la valeur 15 (c'est-à-dire que la collision en cours n'est pas la seizième), alors l'étape 132 va simuler une collision vers la station ou abonné ETHERNET, y compris le cas échéant l'envoi du brouillage ou "JAM". On refuse donc les données issues de la station, conformément au protocole BEB. Après cela, l'étape 134 incrémente d'une unité le nombre de collisions Nbcoll, et l'on repasse comme précédemment par l'étape 190 pour recommencer la boucle générale.

On peut maintenant décrire ce qui se passe après l'étape 140.

Après l'arrêt de la réception, c'est-à-dire l'interruption de la tentative de réémettre des données reçues du canal vers la station (données dont on se rappelle qu'elles sont demeurées dans la mémoire FIFO_r jusqu'à ce stade), on passe à l'étape 122, pour exécuter l'émission-station demandée à l'étape 114, dans les mêmes conditions que pour les autres émissions, ainsi qu'il vient d'être décrit.

Ce mécanisme a plusieurs particularités importantes, et, dans une certaine mesure, indépendantes :
- Quand le test de l'étape 122 détermine que la mémoire FIFO_e n'a pas atteint son seuil de remplissage, il y a, pour les échanges entre la station et la mémoire, priorité à l'abonné, c'est-à-dire à la station, et non à la réception (il est rappelé que, côté canal, pour les échanges entre le canal et la mémoire, il y a priorité au canal).
- Si, par contre, le niveau de remplissage de la mémoire FIFO_e est supérieur au seuil, alors il y a par exemple une collision simulée renvoyée vers la station, dans le but de faire attendre celle-ci. Il est toutefois prévu une exception, si une émission a déjà été refusée quinze fois: on va alors forcer son acceptation à la seizième fois (à la seizième collision simulée), car c'est la dernière occasion d'utiliser cette émission, faute de quoi elle serait irrémédiablement perdue.

En effet (c'est l'un des avantages obtenus par le dispositif ID selon l'invention), avec une fixation convenable du seuil de remplissage de la mémoire FIFO_e, on peut se permettre d'accepter ainsi des émissions supplémentaires que l'on aurait sinon toutes chances de perdre.

Par exemple, dans un mode de réalisation particulier du protocole de résolution de collision déterministe, l'unité relais selon l'invention a une chance de pouvoir émettre une trame au profit de sa station toutes les 150 millisecondes environ (au plus) en situation de collision, et si toutes les trames effectivement émises sont de longueur maximum. De son côté, tel qu'appliqué ici entre la station et l'unité relais ID, le protocole de résolution de collision BEB (modifié) va créer un temps d'attente variant, selon les estimations de la Demanderesse, de 0 à 350 millisecondes, avec une valeur moyenne située à environ 175 millisecondes. Il résulte de ces deux constatations qu'en principe aucune trame ne peut être perdue.

En d'autres termes, l'échange unité-relais/canal se produit en mode de résolution de collision déterministe. Dans ce dernier mode, on est sûr de pouvoir émettre la trame d'émission, dans le "créneau" ou "slot", qui est attribué à l'unité-relais, au niveau du protocole déterministe. Le fait que la mémoire FIFO_r est vide ou pratiquement vide signifie qu'il n'y a pas de réception côté canal; à son tour, cela signifie:
- soit que le canal est libre, auquel cas la station peut naturellement émettre,
- soit que le canal est en période de résolution de collision, ce que l'on appelle souvent "époque", auquel cas il y a une tranche de temps qui est allouée à la station pour émettre (l'unité-relais le sait, mais la station ne le sait pas).

Dans la mesure où la mémoire FIFO_r est vide ou suffisamment vide, la Demanderesse prévoit, de préférence, de rendre l'émission prioritaire, pour donner à la station la possibilité d'exploiter au mieux la bande passante, c'est-à-dire les capacités de transmission du canal.

Bien qu'il ait été indiqué précédemment qu'à l'étape 110 on pouvait faire porter le test sur le fait que la mémoire FIFO_r est à peu près vide, il est préférable, dans la plupart des cas, de déterminer simplement si la mémoire FIFO_r est strictement vide, de façon que la règle générale demeure que l'unité relais ID selon la présente invention agisse en principe pour réémettre immédiatement vers la station les données reçues du canal.

Il est indiqué ci-dessus que le protocole BEB classique est modifié selon la présente invention. Ce protocole n'est pas en fait modifié en lui-même, puisque la station va l'appliquer strictement. Il est simplement modifié du côté du dialogue entre l'unité relais ID et la station, car cette unité relais ID laisse pratiquement toujours priorité à la station, ce qui n'est pas vrai dans l'application générale du protocole BEB.

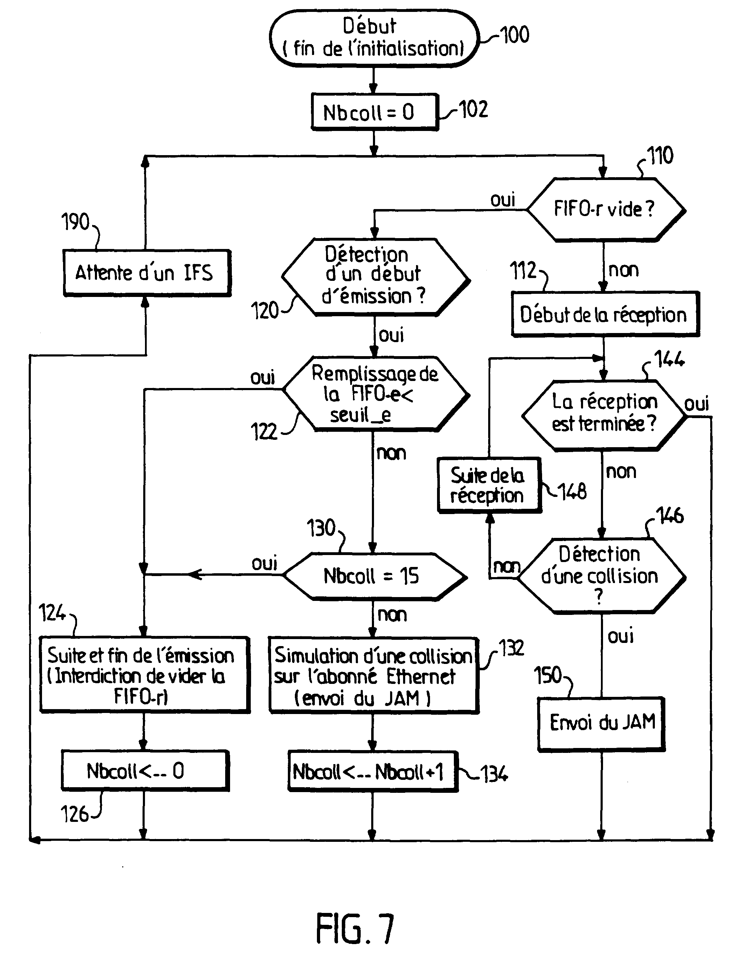

On décrira maintenant une variante du mécanisme de la figure 6, en référence à la figure 7. Cette variante a deux particularités.

La première particularité est que l'on supprime la passerelle entre l'émission et la réception, définie sur la figure 6 par l'étape 140.

La seconde particularité réside en ce que les opérations dites "réception" sont modifiées à partir de l'étape 112. Le test 144 détermine si la réception commencée en 112 a pu se terminer correctement. Si oui, on retourne à l'étape finale 190. Sinon, on recherche en 146 s'il y a collision station/unité-relais (cette fois, une vraie collision sur le pseudo-réseau). En l'absence de collision, l'étape 148 permet un retour vers le test 144 de réception terminée. Si, au contraire, l'étape 146 indique une collision, alors en 150 on envoie, le cas échéant, un brouillage vers la station. La sortie de l'étape 150, et la sortie de l'étape 144 indiquant que la réception est terminée conduisent toutes deux à l'étape finale 190.

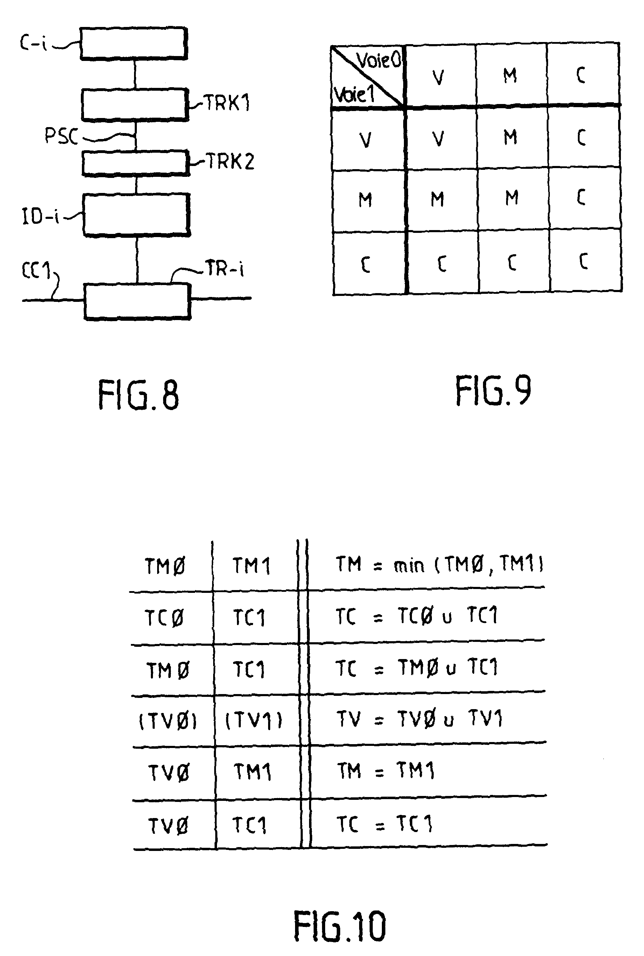

La variante de la figure 7 peut remplacer le mécanisme de la figure 6. Cette variante est nécessaire dans le cas (figure 8) où la liaison entre le dispositif ID-i et le coupleur C-i n'est pas réalisée directement, mais à travers deux transcepteurs TRX1 et TRK2, qui assurent l'échange entre les deux blocs ID-i et C-i à la manière d'un réseau ETHERNET (soit comme un "pseudo-réseau"), sur un "pseudo-canal" PSC.

Les fonctions de gestion de la redondance sont décrites ci-après, en référence aux figures 9 à 13.

Il est rappelé que le mot redondance est utilisé dans le sens doublement du nombre de voies d'émission, de réception et de détection de collision. Selon l'invention, les deux voies utilisées (appelées également médium) pourront présenter des dissymétries de topologie (différence de longueur, par exemple) et/ou de nature (matériaux différents, par exemple). Par conséquent, il n'est plus nécessaire de symétriser les deux voies, et cela peut permettre la réjection d'un certain nombre de modes communs.

Jusqu'à présent, la gestion de la redondance s'effectuait en général à l'aide d'un pilote spécial de redondance, externe au coupleur.

Le protocole ici proposé par la Demanderesse est interne, et obéit aux règles suivantes :
- l'émission se fait systématiquement de façon identique sur les deux canaux (ou voies);
- en réception, on exploite ce que donne l'un des canaux (au point de vue des chronogrammes des signaux), tout en vérifiant sa cohérence avec ce que donne l'autre canal; une divergence est signalée comme information d'état du réseau (une information de service), et ce au bout d'une tranche canal;
- il y a état de collision si une collision est observée sur l'un au moins des canaux;
- enfin, un mode dégradé est possible, avec un seul canal en service.

Hormis ce mode dégradé, en termes d'états (figure 9), on a:
- un canal vide V si les deux canaux (voie 0 et voie 1) sont vides,
- un état message M si les deux voies sont en message, ou bien l'un en message et l'autre vide,
- un état collision C, dans les autres cas, où l'une au moins des voies est en collision.

Cette notion d'états est à compléter par la considération des intervalles de temps auxquels ils s'appliquent. On note TM0, TC0 et TV0 des intervalles de temps pendant lesquels la voie 0 est respectivement à l'état M, C et V. On note de même pour la voie 1. L'intervalle de temps final, après gestion de la redondance, est aussi défini de même, sans le chiffre final.

Alors (figure 9):
- un temps de message TM est le minimum de TM0 et TM1,
- en cas de collision sur une voie, avec message ou collision sur l'autre, le temps de collision TC est la réunion des intervalles de temps TC0 et TC1, ou bien TM0 et TC1 (par exemple),
- une collision TC1 ou un message TM1 sur une voie tandis que l'autre est vide se traduisent par un temps de collision TC=TC1 ou TM=TM1, respectivement,
- si les deux voies sont vides pendant TV0 et TV1, il y a canal vide pour un temps TV égal à la réunion des intervalles de temps TV0 et TV1.

Il est considéré comme accessible à l'homme du métier de réaliser les fonctions logiques qui sont décrites ci-dessus, de préférence sous forme microprogrammée. Celles-ci sont incorporées au multiplexeur MI (dans lequel on pourrait distinguer une fonction de pur multiplexage, et une fonction de commande de multiplexage, incorporant ladite logique microprogrammée).

Il apparaît ci-dessus des situations asymétriques sur collision, notamment pour des couples tels que TM0+TC1 (message sur un canal et collision sur l'autre), ou TM1+TV0 (message sur un canal et autre canal vide). Ces situations peuvent être considérées comme des erreurs, dont le traitement dépendra des choix faits à la conception du réseau. Il restera toujours possible de passer en mode dégradé, en utilisant le canal qui fonctionne le mieux (en théorie celui qui n'a pas de collision, dans les deux cas visés).

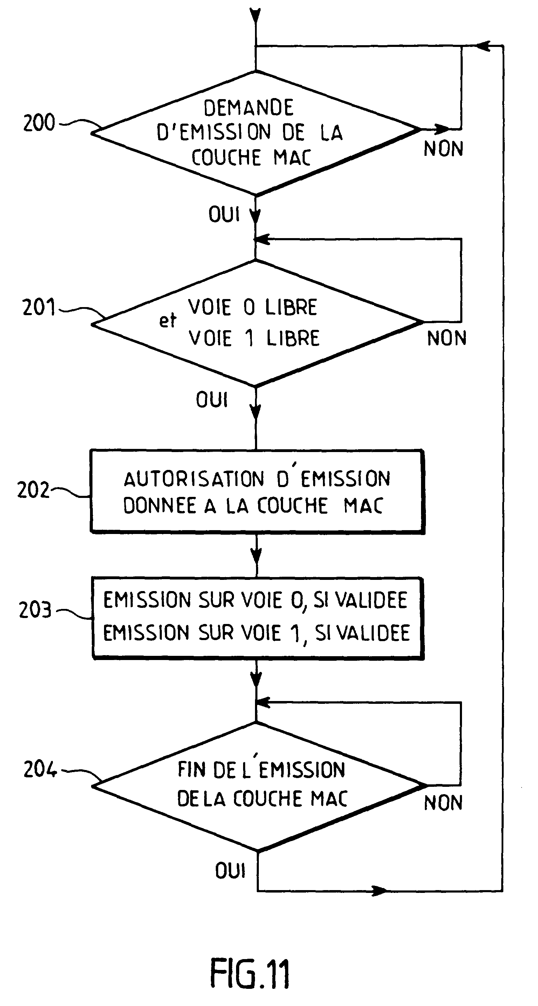

On va décrire maintenant plus en détail le mécanisme de gestion de la redondance selon l'invention. On se réfère tout d'abord à la figure 11 pour décrire le mécanisme d'émission.

Que l'on soit en mode d'émission ou de réception, le multiplexeur interne MI est dans un mode d'attente de début d'émission ou de réception. Il est donc (étape 200) dans un état de veille. Tant qu'il ne détecte pas de début d'émission, il demeure en attente. En revanche, lorsque le multiplexeur détecte un début d'émission de la demi-couche MAC (Medium Access Control), il effectue un premier test (étape 201) afin de déterminer si les deux voies 0 et 1 sont libres (en d'autre termes, on vérifie, d'une part, qu'il n'y a pas de modulation sur le réseau, et d'autre part, que le réseau n'est pas en période d'IFS). Tant que le résultat du premier test 201 est négatif, on recommence ledit test (201).

Lorsque ce résultat est positif, MI donne l'autorisation d'émettre (étape 202) à la demi-couche MAC. Puis (étape 203), MI autorise l'émission sur la ou les deux voies selon leur état de validité. Ainsi, si les deux voies sont valides, l'émission est autorisée sur chacune d'entre elles, tandis qu'en cas de validité de l'une seulement des deux voies, l'autorisation d'émettre n'est donnée que sur la voie validée.

Après un intervalle de temps prédéterminé, MI effectue un second test (étape 204) afin de déterminer si l'émission de MAC est terminée. Tant que le résultat du second test 204 est négatif, on recommence ledit test (204). Lorsque ce résultat est positif, alors MI considère que l'émission est terminée, et il reprend l'état dans lequel il se trouvait au début de la demande (avant l'étape 200), ce qui met fin au mécanisme d'émission.

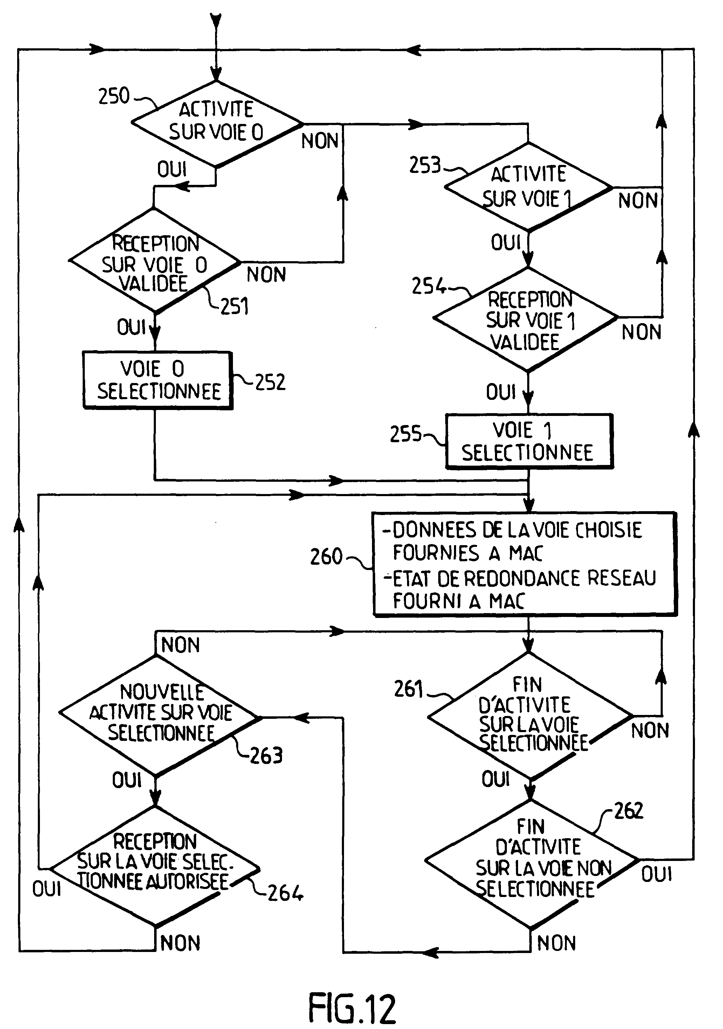

On se réfère maintenant à la figure 12 pour décrire le mécanisme de réception.

Comme dans le mécanisme précédent, le multiplexeur est au départ dans un état de veille. Tant qu'il ne détecte pas de début de réception, il demeure en attente. En revanche, lorsque le multiplexeur interne MI détecte un début de réception de signaux du réseau, il effectue un premier test (étape 250) afin de déterminer s'il y a une activité sur l'une des deux voies, par exemple la voie 0.

Si le résultat de ce premier test 250 est positif, alors la réception s'effectue sur la voie 0. MI procède alors à un second test (étape 251) qui consiste à déterminer si la réception sur la voie 0 est validée. En cas de réponse positive, la voie 0 est considéré par MI comme sélectionnée (étape 251) et l'on passe à l'étape suivante 260, sur laquelle on reviendra plus loin. En cas de réponse négative, on passe à l'étape 253 sur laquelle on reviendra plus loin.

En revanche, si le résultat du premier test 250 ou du second test 251 est négatif, MI effectue un second test (étape 253) identique au premier test 250 afin de déterminer s'il y a une activité sur la voie 1.

Si le résultat de ce troisième test 253 est négatif, alors MI reprend son état initial (état de veille).

En revanche, si le résultat de ce troisième test 253 est positif, alors la réception s'effectue sur la voie 1. Mi procède alors à un quatrième test (étape 254) qui consiste à déterminer si la réception sur la voie 1 est validée. En cas de réponse positive, la voie 1 est considéré par MI comme sélectionnée (étape 255) et l'on passe à l'étape suivante 260, sur laquelle on reviendra plus loin. En cas de réponse négative au test 254, alors MI reprend son état initial afin de recommencer les test d'activité à l'étape 250.

Lorsque l'une des deux voies a été sélectionnée (étape 252 ou 255), MI délivre (étape 260) à la demi-couche MAC, d'une part, les données qui se trouvent sur la voie sélectionnée (0 ou 1), et d'autre part, l'état de redondance du réseau selon la table de vérité de la figure 9.

Puis MI effectue un cinquième test (étape 261) afin de déterminer si l'activité sur la voie sélectionnée (0 ou 1) est terminée. Tant que le résultat du cinquième test 261 est négatif, on recommence ledit test (261).

Lorsque ce résultat est positif, MI effectue un sixième test (étape 262) afin de déterminer si l'activité sur la voie qui n'avait pas été sélectionnée (1 ou 0) est terminée.

Si le résultat de ce sixième test 262 est positif, alors MI reprend son état initial afin de recommencer les test d'activité à l'étape 250.

En revanche, si le résultat de ce sixième test 262 est négatif, alors MI procède à un septième test (étape 263) afin de déterminer s'il y a une nouvelle activité sur la voie initialement sélectionnée (0 ou 1). Si le résultat de ce septième test est négatif, alors MI recommence le cinquième test en retournant à l'étape 261. En revanche, si le résultat de ce septième test est positif, MI effectue un huitième test (étape 264) afin de déterminer si la réception sur la voie initialement sélectionnée (O ou 1) est autorisée. Si le résultat de ce huitième test est positif, alors MI retourne à l'étape 260 afin de délivrer à MAC les signaux qui viennent d'arriver sur la voie sélectionnée. Si le résultat de ce huitième test est négatif, alors MI reprend son état initial afin de recommencer les test d'activité à l'étape 250, ce qui met fin au mécanisme de réception.

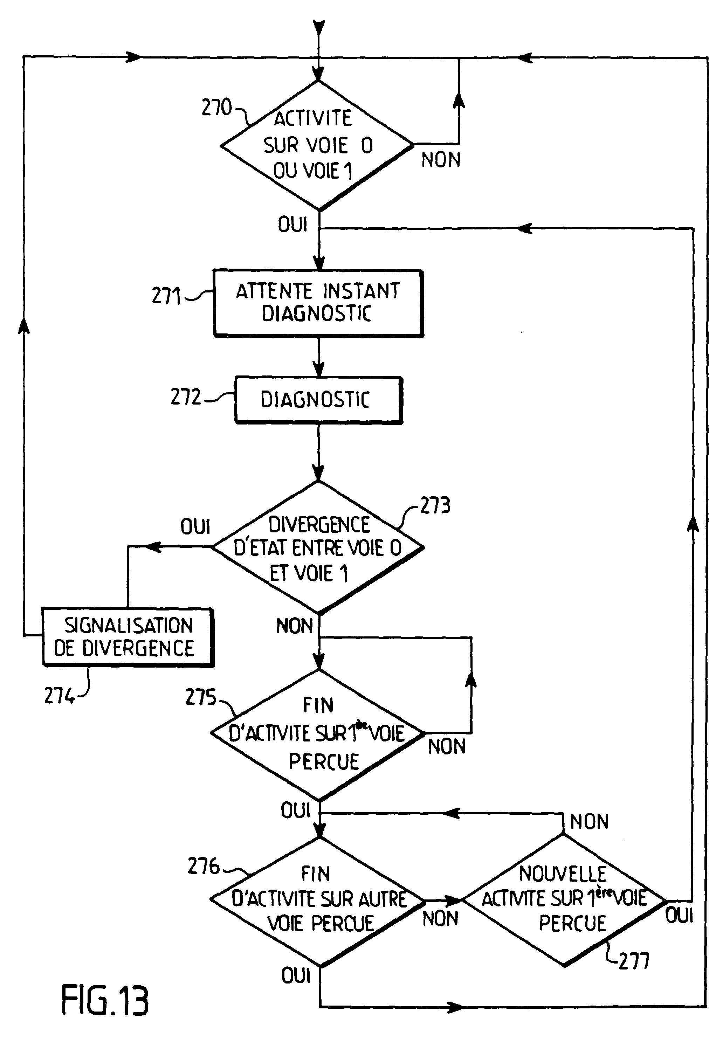

On se réfère maintenant à la figure 13 pour décrire le mécanisme de divergence.

Le multiplexeur interne MI effectue un test de divergence à partir du moment où il a détecté une activité sur l'une au moins des voies. Il s'agit en fait de tests de cohérence entre les deux voies que l'on effectue dès qu'une trame est reçue. Pour ce faire, il détermine dans un premier test (étape 270) s'il y a une activité sur l'une des deux voies, par exemple la voie 0, puis, si ce n'est pas le cas, il interroge la voie 1.

Si le résultat est négatif sur les deux voies, alors MI retourne à son état initial avant l'étape 270.

En revanche, si le résultat est positif (activité sur l'une au moins des deux voies), MI se met dans un état d'attente de diagnostic (étape 271). Après réception du diagnostic (étape 272), MI effectue un second test (étape 273) afin de déterminer s'il y a une divergence d'état entre les deux voies 0 et 1. Si le résultat de ce second test 273 est positif, alors MI produit un signal de divergence (étape 274), ce qui a pour conséquence, par exemple, d'inhiber une voie si une anomalie bloquante (de type collision permanente) est détectée sur la voie concernée, puis MI retourne à l'étape de départ 270. Si le résultat du second test 273 est négatif, alors MI procède à un troisième test (étape 275) afin de déterminer si l'activité sur la première voie perçue est finie.

Tant que le résultat de ce troisième test 275 est négatif alors MI recommence l'étape 275. En revanche, si le résultat du troisième test 275 est positif, MI effectue un quatrième test (étape 276) afin de déterminer si l'activité sur l'autre voie que la première perçue est finie.

Si le résultat de ce quatrième test 276 est négatif alors MI procède à un cinquième test (étape 277) afin de déterminer s'il y a une nouvelle activité sur la première voie perçue. En cas de résultat positif, MI retourne au début de l'étape 271 afin d'attendre un nouveau diagnostic. En revanche, si le résultat du cinquième test 277 est négatif, MI retourne au début de l'étape 276 afin de tester de nouveau l'activité de l'autre voie.

Si le résultat du quatrième test est positif, alors le mécanisme de divergence prend fin, et MI retourne au début dudit mécanisme, à l'étape 270.

La Demanderesse a préféré décrire ci-dessus des modes de réalisation complets, cherchant à tirer le maximum des réseaux ETHERNET.

Bien entendu, l'unité relais ID selon la présente invention peut être utilisée soit seulement pour le passage d'un mode de résolution BEB classique entre abonné et relais à un mode de résolution déterministe entre relais et canal, soit seulement pour le passage d'un mode de réseau à un seul canal entre station et unité-relais à un mode à deux canaux redondants entre l'unité-relais et ces canaux. Plus généralement, le dispositif selon l'invention pourrait être utilisé notamment pour toute application qui nécessiterait d'une part une gestion qui soit rigoureusement conforme à la norme, pour le protocole de réseau entre la station et l'unité-relais, et d'autre part une gestion modifiée par rapport à la norme, entre l'unité-relais et le ou les canaux.

Comme déjà indiqué, on peut diffuser dans le réseau des informations de service, dont le nombre de stations en fonction et la définition de leurs numéros. A cela s'ajoutent des données statistiques sur la charge du réseau, par exemple, ou encore d'autres trames "hors données station", émises à cadence choisie pour vérifier l'état du réseau. L'un des avantages de l'invention est que les unités-relais proposées (ou certaines d'entre elles) peuvent intercepter ces trames, qu'elles utilisent elles-mêmes, sans les transmettre à leur station.

## Revendications

1. Dispositif électronique formant une unité-relais, destinée à s'insérer dans le branchement entre une station et le canal de communication d'un réseau à diffusion, en particulier du type Ethernet, ce dispositif étant caractérisé en ce qu'il comprend une connexion (IDN2) vers la station, une connexion (IDN1) vers le canal, une mémoire, comportant une zone canal (FIFO_r) et une zone station (FIFO_e), accessibles indépendamment en mode premier entré/premier sorti, et des moyens de traitement (UC1, UC2; MI), agencés pour utiliser les deux zones de la mémoire afin de gérer séparément les échanges unité/canal et les échanges unité/station, selon deux modes au moins partiellement différents.

2. Dispositif selon la revendication 1, caractérisé en ce que la zone-canal (FIFO_r) de la mémoire est dimensionnée pour accepter toute réception, jusqu'au voisinage de la charge maximale du canal de communication.

3. Dispositif selon l'une des revendications précédentes, caractérisé en ce que la mémoire (FIFO) est à double port.

4. Dispositif selon l'une des revendications 1 à 3, caractérisé en ce que les moyens de traitement (UC1, UC2) sont munis d'un mode déterministe pour la résolution de collisions côté canal, et du mode standard (BEB) pour la résolution de collisions côté station.

5. Dispositif selon l'une des revendications 1 à 4, caractérisé en ce que la connexion vers la station (IDN2) comprend un codeur-décodeur-station (DO2), et en ce que la connexion vers le canal (IDN1) comprend au moins un codeur-décodeur-canal (DO11, DO12).

6. Dispositif selon la revendication 5, caractérisé en ce que la connexion vers la station comprend une interface série/parallèle bidirectionnelle (ISP2), suivie du codeur-décodeur-station, et en ce que la connexion vers le canal comprend au moins une interface série/parallèle bidirectionnelle (ISP1) suivie du codeur-décodeur-canal.

7. Dispositif selon l'une des revendications 1 à 6, caractérisé en ce que les moyens de traitement sont munis d'un moyen de gestion de deux canaux en redondance (MI), côté canal.

8. Dispositif selon la revendication 7, caractérisé en ce que la connexion vers le canal comprend deux codeurs-décodeurs-canal (DO11, DO12), respectivement reliés à deux transcepteurs (TR1-i, TR2-i) propres à être montés sur deux canaux de communication utilisés en mode redondant, et directement alimentés dans l'unité-relais.

9. Dispositif selon l'une des revendications 7 et 8, caractérisé en ce que les deux canaux présentent des dissymétries de topologie et/ou de nature.

10. Dispositif selon l'une des revendications précédentes, caractérisé en ce que les moyens de traitement comprennent:
- des moyens de traitement côté-canal (MGC), aptes à
. coopérer avec la connexion-canal pour entretenir des signaux d'état-canal, représentatifs d'une réception (RX1), d'une émission (TX1), ou d'une collision (COL1), au niveau du canal de communication,
. répondre au fait que les signaux d'état-canal indiquent une réception, en stockant temporairement les données de réception (canal vers station) dans la zone-canal de la mémoire,
. tenter l'émission de données contenues dans la zone-station de la mémoire,
. traiter les collisions unité/canal selon un mode-canal,
- des moyens de traitement côté-station (MGS), aptes à
. coopérer avec la connexion-station pour entretenir des signaux d'état-station, représentatifs d'une réception (RX2), d'une émission (TX2), ou d'une collision (COL2), au niveau de l'échange unité/station,
. répondre au fait que les signaux d'état-station indiquent une tentative d'émission par la station, en stockant temporairement les données d'émission (station vers canal) dans la zone-station de la mémoire,
. tenter la transmission à la station de données contenues dans la zone-canal de la mémoire,
. traiter les collisions unité/station selon un mode-station.

11. Dispositif selon la revendication 10, caractérisé en ce que les moyens de traitement de données-station (MGS) sont agencés pour répondre à une demande d'émission par la station en stockant les données d'émission, ou en les refusant avec production d'un état-station de collision, suivant que la zone-station de la mémoire se trouve ou non en deçà d'une condition choisie de remplissage.

12. Dispositif selon la revendication 11, caractérisé en ce que, le mode de résolution de collisions côté station étant le mode standard (BEB), les moyens de traitement de données-station (MGS) sont agencés pour accepter quand même une demande d'émission par la station au terme d'un nombre fixé de collisions côté station.

13. Dispositif selon l'une des revendications 11 et 12, caractérisé en ce que, la connexion vers la station étant réalisée par un codeur-décodeur station, propre à être relié à un coupleur que comprend la station, le mode de résolution de collisions des moyens de traitement de données-station (MGS) est modifié pour tendre à laisser priorité à l'émission par la station, lorsque la zone-canal de la mémoire est en deçà d'une condition choisie de remplissage.

14. Dispositif selon l'une des revendications 11 à 13, caractérisé en ce que, la connexion vers la station étant réalisée par un codeur-décodeur station, propre à être relié à un coupleur que comprend la station, les moyens de traitement côté station (MGS) tentent une réception côté station en l'absence de demande d'émission par la station, mais interrompent cette tentative, sans émettre de collision, si une demande d'émission par la station survient entre temps.

15. Dispositif selon l'une des revendications 11 à 14, caractérisé en ce que, le mode de résolution de collisions côté canal étant d'un type qui alloue systématiquement un créneau temporel à chaque station, les moyens de gestion de données-station (MGS) acceptent l'émission des données-station, en situation de résolution de collision côté canal, pour leur envoi dans ledit créneau par les moyens de traitement côté-canal.
